# EUROPEAN PATENT APPLICATION

(11) **EP 1 780 107 A2**
(43) Date of publication of application: **02.05.2007**
(21) Application number: 06123027.2
(22) Date of filing: 26.10.2006
(51) Int. Cl.: B62J 31/00

(54) **Chain lubricating system**

(30) Priority: 26.10.2005 GB 0521821
(71) Applicant: Mercer, Paul Francis, Kirk Michael, Isle of Man IM6 1AT (GB)
(72) Inventor: Mercer, Paul Francis, Kirk Michael, Isle of Man IM6 1AT (GB)
(74) Representative: Gillam, Francis Cyril

(57) **Abstract**

A lubricating system for the final drive chain (13) of a machine such as a motorcycle (10) has a source (14) of lubricating oil under pressure, an electrically-operated valve (17) for releasing oil from the source and a duct (18,19) leading from the valve to the chain. A control unit (25) receives impulses generated dependent upon the speed of the vehicle and the valve (17) is opened for a pre-set period when a predetermined number of impulses have been received. The predetermined number of impulses and the duration of valve opening may be selected to ensure proper lubrication of the chain. Valve opening may be inhibited if the speed of the vehicle falls below a minimum value.

## Description

This invention relates to a lubricating system for a closed loop chain drive of a machine. In particular, but not exclusively, the invention relates to a lubricating system for the secondary drive chain of a motor cycle. The invention further relates to a machine or vehicle whenever provided with such a lubricating system.

Though this invention may be employed with various types of machinery having a closed loop chain drive, including static machines, the invention is particularly applicable to vehicles having a drive chain for a road wheel. A particular kind of vehicle on which this invention may be employed is a motorcycle having a secondary drive chain for the rear wheel. Though the lubricating system could be fitted to static machines or various vehicles having a chain drive, such as a pedal cycle, an electric cart or a quad-bike, it will hereinafter be described expressly in relation to motorcycles.

Many motorcycles are provided with a secondary drive chain, to transfer power from the gearbox to the rear wheel. Though it is possible to encase such a secondary drive chain to protect it from the elements, more usually the chain is exposed over the greater part - if not all - of its length. In order to ensure the chain has a reasonable life, it is most important that it is lubricated frequently and to this end there have been various proposals for chain oiling systems which operate either on demand, or automatically. A problem with the former is that the rider has to remember to operate the system at the appropriate intervals - too often results in wastage of oil, the likelihood of oil dripping on the ground and the motorcycle becoming dirty, whereas and too infrequently reduces the life of the chain.

A known form of automatic chain oiler derives electrical impulses either from an electronic speedometer drive or from some other source such as a reed switch and magnet associated with a wheel of the motorcycle, and after a pre-set number of impulses have been counted, a pump is operated to pump oil from a reservoir to an oiler nozzle positioned adjacent the chain. A particular difficulty with this system is that the volume of oil dispensed depends upon several factors such as the viscosity of the oil loaded into a container therefor as well as the temperature of the oil and the efficiency and accuracy of the pump. As such, reliable oiling of the chain cannot be assured.

It is a principal aim of the present invention to address the above-mentioned problems of the described automatic chain oiler suitable for use with a motorcycle.

According to this invention, a lubricating system for a closed loop chain drive of a machine provided with means to generate electrical impulses dependent upon the velocity of operation of the chain drive comprises a source of lubricating oil, a duct leading from the source to the chain to be lubricated and a control unit arranged to receive said impulses and periodically to release oil from the source dependent upon the number of impulses received. Such a lubricating system is characterised by utilising a pressurised source of lubricating oil, an electrically-operated valve connected to the source and arranged when energised to permit the release of oil therefrom to the duct, and by the control unit being arranged periodically to energise the electrically-operated valve dependent upon the number of impulses received.

When this invention is implemented on a vehicle such as a motorcycle, the lubrication of the drive chain is performed on an automatic basis, primarily dependent upon the distance travelled by the vehicle as determined by the electrical impulses the frequency of which depend upon the speed of the vehicle. By providing a source of lubricating oil which is under pressure and an electrically-operated valve which, when energised, permits the release of the pressurised oil from the source, the volume of oil dispensed may be controlled by adjusting the duration of opening of the valve. No pump for the oil is provided and so the volume dispensed does not depend upon the characteristics of a pump, unlike the situation with the known arrangements.

The impulses may be generated by any suitable arrangement associated with a part of the machine the operation of which is related to the velocity of the chain drive. For example, it would be possible to provide a sensor which directly senses the velocity of a run of the chain drive, or the rotation of a sprocket forming a part of the chain drive. Another possibility would be to sense the rotation of some other component the rotation of which is directly or indirectly related to the velocity of the chain drive. In the case of a vehicle, the impulses could be generated with a speed sensor associated with a road wheel of the vehicle, or could be derived from a speedometer of the vehicle, especially if provided with an electronic speedometer. Yet another possibility for a vehicle having an internal combustion engine with an engine management system would be for the management system to provide the impulses to the control unit. Further, such an engine management system may itself serve as the control unit of the lubricating system of this invention, and so control the operation of the electrically-operated valve without the need for a separate control unit.

Preferably, the control unit is arranged to inhibit operation of the valve unless the number of impulses received in a given time period exceeds a pre-set value. In the case of a vehicle, that value may correspond to a vehicle speed of about 5 mph (about 8 km/hr). In this way, oiling of the chain may be avoided should the vehicle be travelling very slowly or be stationary, so that over-oiling of a small part of the chain can be eliminated, along with possible wastage of oil.

The control unit may be adjustable to permit the dispensing of a selected volume of lubricating oil, on each operation of the valve, by controlling the duration of opening of the valve. Further, the control unit may be adjustable to permit an appropriate selection of the distance travelled by a vehicle to which the system is fitted, between successive operations of the valve as determined from the received impulses. By appropriate selection of these parameters, it becomes possible to achieve optimum oiling for a vehicle chain, having regard to the operation of the vehicle.

In addition to the above adjustments, the control unit may also be adjustable to permit the accommodation of different numbers of impulses generated for any particular vehicle to travel a certain distance. In this way, the lubricating system becomes adaptable to suit a wide variety of vehicles, and in particular those fitted with electronic speedometers where electrical impulses are generated to drive the speedometer and there may be produced more than one impulse per revolution of a wheel.

The source of lubricating oil preferably comprises a canister containing the oil together with a gas under pressure to drive the oil out of the canister when the electrically-operated valve is opened. In order to facilitate the mounting of the canister at more or less any disposition within the confined space usually available with a motorcycle, it is advantageous to have the oil contained in a flexible bag disposed within the canister, the bag communicating with an outlet orifice from the canister and the pressurising gas being provided within the canister but externally of the bag. In this way, oil will be discharged out of the orifice on opening the electrically-operated valve, irrespective of the disposition of the canister.

A connector may be provided to connect a pipe to the canister, the pipe leading to the electrically-operated valve, or the valve may be incorporated within a housing adapted for direct connection to the canister. In either case, the canister may have an integral valve to control the release of lubricating oil from the canister, which integral valve is opened automatically when a connection is made to the canister. In this way, replacement canisters of oil under pressure may be supplied to a user of the system, with the user having to do no more than simply remove a spent canister and connect a full canister of oil to allow the continued operation of the lubricating system.

Another possibility is for the electrically operated valve to comprise a valve provided as a component part of the canister to control the release of oil therefrom, a solenoid being associated with the canister and operatively coupled to said valve thereof in order that energisation of the solenoid opens the valve of the canister, so releasing oil to the duct.

Yet another alternative is for the canister to have a pierceable membrane for sealing the canister when fully charged, which membrane is pierced by a needle forming a part of a connector for coupling to the canister, so that the needle communicates with the oil supply in the canister when the connector is coupled to the canister. Such a connector may be screw-threaded and engageable with corresponding threads provided on the canister.

In a preferred embodiment, the control unit is separate from the electrically-operated valve and is adapted for remote mounting with respect to the source of lubricating oil and the electrically-operated valve. Such a control unit may include a display device for showing the settings of the control unit and the operation of the system. Further, the display device may show the volume of oil remaining within the source in order that a user may be notified when the source should be replenished. This could be achieved by the control unit counting the number of operations of the electrically-operated valve, or perhaps by monitoring the pressure of the oil still in the source. Either way, the control unit may issue a suitable warning to indicate that the source of pressurised oil should be replenished.

As an alternative to the above, the control unit may be mounted within a housing containing the electrically-operated valve, the impulses being supplied to the control unit. In this case, the control unit may drive a remote display device having the functionality described above.

This invention extends to a vehicle such as a motorcycle whenever provided with a chain oiling system of this invention as described above.

By way of example only, two specific embodiments of motorcycle chain lubricating system arranged in accordance with this invention will now be described in detail, reference being made to the accompanying drawings in which:-
Figures 1A and 1B illustrate a motorcycle having various parts cut away, together with the principal components of the first embodiment of the chain oiling system of this invention;
Figure 2 diagrammatically illustrates the first embodiment of chain oiling system shown in Figure 1; and
Figure 3 diagrammatically illustrates the second embodiment of chain oiling system.

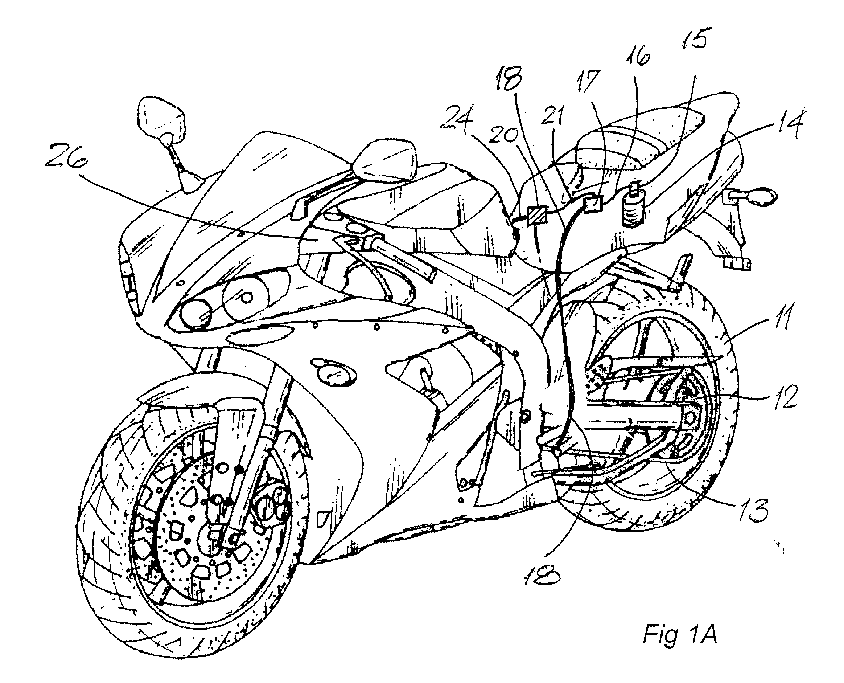

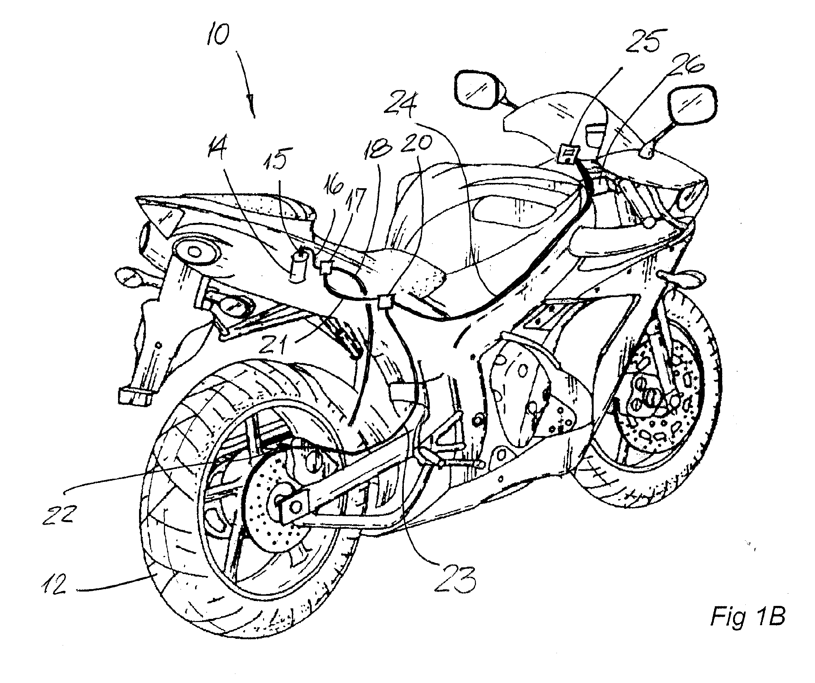

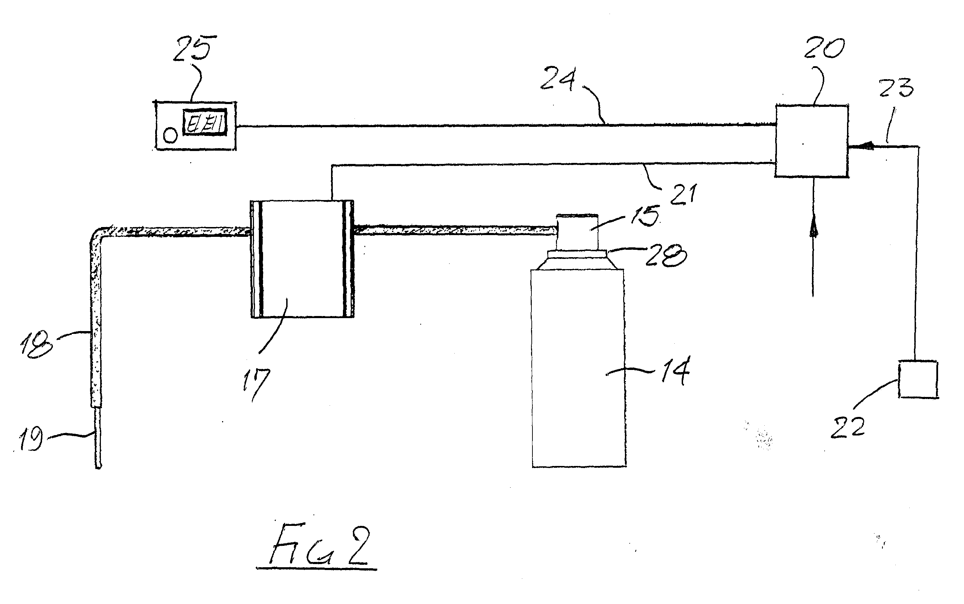

Referring initially to Figures 1A and 1B there is illustrated in outline form a motorcycle 10 including a rear wheel 11 having a chain drive including a rear sprocket 12 and a chain 13. The embodiment of chain lubricating system includes a canister 14 fitted under the seat and containing lubricating oil under pressure, and an integral valve to control the egress of oil from the canister. A connector 15 is coupled to the upper end of the canister 14 in such a way that the integral valve is opened on completing the connection. A pipe 16 extends between the connector 15 and a precision solenoid valve 17, mounted to a suitable part of the motorcycle, again under the seat. A duct 18 leads from the outlet side of the solenoid valve to a location adjacent the gearbox drive sprocket for the chain 13, the duct having a nozzle or spray pipe 19 (Figure 2) adapted to provide a mist or spray of lubricating oil on to the chain, when the solenoid valve 17 is opened.

A junction box 20 is mounted to a suitable part of the motorcycle, the junction box being connected by wires (not shown) to the motorcycle battery, and also having wires 21 for supplying current to the solenoid valve 17. A speed sensor 22 is associated with the rear wheel adjacent the brake disc, in order to provide electrical impulses on rotation of the wheel. The speed sensor is connected to the junction box 20 by wire 23 and a further wire 24 interconnects the junction box 20 and a control unit 25 mounted on or near the handlebars 26. The control unit 25 includes a microprocessor running a pre-loaded program, in order to allow control of the operation of the precision solenoid valve 17, dependent upon various parameters pre-set in the program.

The control unit 25 also includes a digital display device, such as a two- or three-character seven-segment display, for the display of information concerning the operation of the system. Further, the control unit has at least one input button or switch, in order to permit a user to set the required operation characteristics.

Figure 2 shows the components described above, but in diagrammatic form. The canister 14 is cylindrical and has a neck 28, to which is coupled the connector 15. The oil is contained within a flexible bag provided internally in the canister, the space between the bag and the canister being pressurised to a sufficient extent to ensure all of the oil in the bag is driven out of the canister, after a sufficient number of operations of the valve 17. A further valve (not shown) is provided within the neck 28 of the canister 14 to allow transport of a fully charged canister before use, which further valve is automatically opened on coupling the connector 15 to the neck 28.

Pipe 16 will be pressurised so long as there is pressure in the canister 14 and so must be capable of resisting that pressure and should be isolated from chafing or other possible damage. The solenoid valve 17 is of a conventional construction and is normally closed, but is opened when the solenoid is energised. Electricity for energising the solenoid is supplied under the control of the program running in the microprocessor, taking into account the parameters pre-loaded into that program.

The input button or switch of the control unit should allow the entry of data concerning the required operation of the lubricating system. In a first input mode, the number of electrical impulses produced by the speed sensor should be entered, for the motorcycle to travel a certain distance. Most conveniently, this may be performed by setting the control unit in the first input mode and then wheeling the motorcycle for that distance - perhaps 10 m. In a second input mode, the distance to be travelled by the motorcycle between operations of the solenoid valve 17 should be entered - for example in miles, which may be loaded by repeated operations of the input button or switch. In a third input mode, the duration of opening of the solenoid valve 17 should be entered. This could be set for example in tens or hundreds of milliseconds, or could be set by the entry of a number which itself is directly related to the duration of opening, in seconds. Again, this could be done by repeated operations of the input button or switch. Once the data has been appropriately entered, the system may be returned to its automatic mode, to perform chain oiling after the motorcycle has travelled the required distance. The program should inhibit operation of the system should be motorcycle speed fall below a pre-set value such as 5 mph. Should an oiling be determined as needed when the vehicle is travelling slower than this pre-set value, then the control unit should perform the oiling when the vehicle is next travelling faster than the pre-set value.

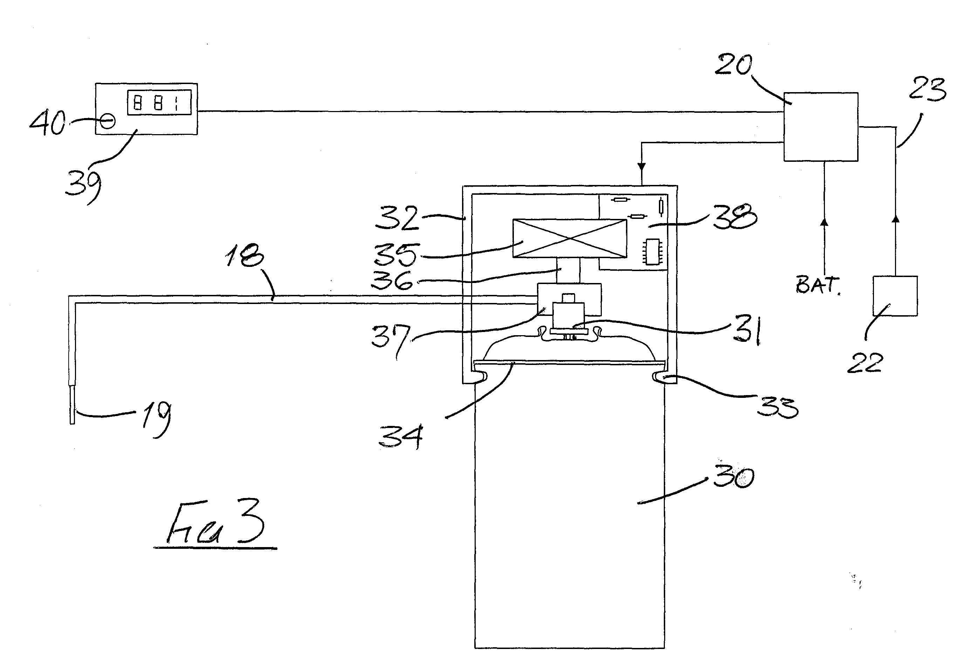

Figure 3 shows an alternative embodiment of chain lubricating system of this invention. Like parts with those of the first embodiment described with reference to Figure 2 are given like reference numerals and will not be described again, here.

In the embodiment of Figure 3, a metal canister 30 of lubricating oil under pressure is employed, the basic configuration of that canister corresponding to well-known cans for aerosols and including a head section provided with an integral valve 31 which is opened by moving the valve stem towards the base of the canister. A cylindrical housing 32 has an internal lip 33 around its lower periphery and is snap-fitted to a rim 34 at the top of the canister. Mounted internally within the housing 32 is a solenoid 35 having an armature 36 carrying a connector 37 for the stem of the valve 31. Duct 18 communicates through a side wall of the housing to the connector 37. Also mounted within the housing 32 is a control unit 38, to which electrical power is supplied from the motorcycle battery, as well as the impulses generated by the speed sensor 22. Further, a display 39 adapted for mounting on the handlebars of the motorcycle is connected to the control unit 38, that display including one or more push-buttons 40 for controlling the operation of the control unit and of the information displayed.

The embodiment of Figure 3 operates in essentially the same manner as that described above with reference to Figure 2. However, by using the valve of a conventional aerosol-type canister and arranging a solenoid to open that valve, the system is simplified and so cheaper to manufacture. In addition, the replacement of an exhausted canister of oil by a fresh canister is relatively simple, merely requiring the old canister to be snapped out of the housing 32 and a new canister fitted, ensuring that the valve stem engages the connector 37.

Though not shown in Figure 3, the lubricating oil in the canister 14 may be contained within a flexible bag in the canister, the pressurising gas being provided between the bag and the walls of the canister. No dip-pipe is required within the canister for the oil to be dispensed. In this way, the canister may be mounted in any orientation, wherever is convenient on the motorcycle. There is the further advantage that the pressurising gas is not released to the environment, when oil is dispensed.

## Claims

1. A lubricating system for a closed loop chain drive (13) of a machine (10) provided with means to generate electrical impulses dependent upon the velocity of operation of the chain drive, said lubricating system comprising a source (14) of lubricating oil, a duct (18,19) leading from the source to the chain to be lubricated and a control unit (25) arranged to receive said impulses and periodically to release oil from the source (14) dependent upon the number of impulses received, **characterised in that** the source (14) of lubricating oil is pressurised, **in that** an electrically-operated valve (17) is connected to the source (14) and is arranged when energised to permit the release of oil therefrom to the duct (18,19), and **in that** the control unit (25) is arranged periodically to energise the electrically-operated valve (17) dependent upon the number of impulses received.

2. A lubricating system as claimed in claim 1, wherein the control unit (25) inhibits the operation of the valve (17) unless the number of impulses received in a given time period exceeds a preset value.

3. A lubricating system as claimed in claim 2 and intended for use on a vehicle (10), wherein said preset value for the given period of time is equivalent to a vehicle speed of about 8 km/hr (approximately 5 mph).

4. A lubricating system as claimed in any of the preceding claims, wherein the control unit (25) is adjustable to permit the dispensing of a selected volume of lubricating oil on each operation of the valve (17), or is adjustable to permit the operation of the valve (17) for a pre-selected duration, on each operation thereof.

5. A lubricating system as claimed in any of the preceding claims and intended for use on a vehicle (10), wherein the control unit (25) is adjustable to permit at least one of selection of the distance travelled by the vehicle between successive operations of the valve (17), as determined from the received impulses, and the accommodation of different numbers of impulses generated by different vehicles, for any particular vehicle to travel a given distance.

6. A lubricating system as claimed in any of the preceding claims, wherein the source of lubricating oil comprises a canister (14) containing the oil together with a gas under pressure to drive the oil out of the canister when the electrically-operated valve (17) is opened.

7. A lubricating system as claimed in claim 6, wherein the oil is contained in a flexible bag disposed within the canister (14) and the pressurising gas is provided between the canister and the bag whereby oil is ejected from the canister on opening the electrically-operated valve (17) irrespective of the disposition of the canister.

8. A lubricating system as claimed in claim 6 or claim 7, wherein the electrically-operated valve and the control unit are contained within a housing (32) which is releasably connected to the canister (14) in such a way that the duct (18) automatically communicates with the source of lubricating oil through the electrically-operated valve.

9. A lubricating system as claimed in any of claims 6 to 8, wherein the electrically operated valve comprises a valve provided as a component part of the canister (14) to control the release of oil therefrom, and a solenoid associated with the canister and operatively coupled to said valve thereof.

10. A lubricating system as claimed in claim 8 or claim 9, wherein there is a housing (32) for the electrically-operated valve and the housing has a connector part (37) for releasably receiving a fitting on the canister whereby the duct (18) is automatically connected to an outlet from the canister so that an exhausted canister may be replaced by a full canister.

11. A lubricating system as claimed in any of the preceding claims, wherein the control unit (25,38) includes at least one of a warning device arranged to issue a warning when the remaining volume of lubricating oil in the source is small or is exhausted, and a display device for showing the settings of the control unit and the operation of the system.

12. In combination, a lubricating system as claimed in any of the preceding claims and a vehicle (10) having a final drive chain (13) and means arranged to provide speed-dependent electrical impulses which are supplied to the control unit (25), and the duct (18,19) has an outlet opening which is positioned adjacent the drive chain (13) of the vehicle whereby oil is supplied to the chain on energisation of the electrically-operated valve (17).
